# FASCICULE DE BREVET EUROPEEN

(11) **EP 3 030 630 B1**
(45) Date de publication et mention de la délivrance du brevet: **19.09.2018**
(21) Numéro de dépôt: 14756089.0
(22) Date de dépôt: 09.07.2014
(51) Int. Cl.: C09K 21/02, C09K 3/22, H01B 3/44, H01B 7/295

(54) **COMPOSITIONS THERMOPLASTIQUES IGNIFUGÉES SOUPLES A HAUTE TENUE THERMOMÉCANIQUE, EN PARTICULIER POUR LES CÂBLES ÉLECTRIQUES**
FLEXIBLE FEUERFESTE THERMOPLASTISCHE ZUSAMMENSETZUNGEN MIT HOHER THERMOMECHANISCHER FESTIGKEIT, INSBESONDERE FÜR STROMKABEL
FLEXIBLE FIRE-RETARDANT THERMOPLASTIC COMPOSITIONS HAVING HIGH THERMOMECHANICAL STRENGTH, IN PARTICULAR FOR ELECTRIC CABLES

(30) Priorité: 06.08.2013 FR 1357805
(43) Date de publication de la demande: 15.06.2016
(73) Titulaire: Arkema France, 92700 Colombes (FR)
(72) Inventeur: QUINEBECHE, Sébastien, F-27300 Bernay (FR); PALLUAULT, Vincent, 27300 Saint Martin du Tilleul (FR); SAVIGNAT, Benoît, F-27300 Bernay (FR)
(74) Mandataire: Gorintin, Sarah
(86) Numéro de dépôt international: PCT/FR2014/051756
(87) Numéro de publication internationale: WO 2015/018995

(56) Documents cités:
- EP-A1- 0 953 599
- EP-A1- 1 092 751
- FR-A1- 2 870 542
- FR-A1- 2 985 731

## Description

### Domaine de l'invention

L'invention a pour objet des compositions ignifugées thermoplastiques souples à haute tenue thermomécanique. La présente invention concerne également l'utilisation de cette composition en tant que couche de revêtement (couche extérieure) dans un câble, tuyau ou analogue ainsi qu'en tant que matériau constitutif (couche intérieure) d'une gaine de protection.

Ces compositions sont utiles en câblerie pour isoler et protéger des câbles électriques, des fibres optiques ou des conduits transportant des fluides, tels que des liquides frigorigènes ou des huiles. Dans les applications comme le recouvrement de câbles électriques, pièces électriques et électrotechniques, automobile, outre leur caractère isolant électrique, les matériaux doivent avant tout posséder de haut niveau de résistance au feu (ignifugation). Les installations électriques peuvent en effet être à l'origine de courts circuits et s'enflammer, elles peuvent être aussi mises au contact d'une flamme et donc s'enflammer et propager l'incendie le long des chemins de câbles.

Les polymères thermoplastiques tels que les polyéthylènes, les polyamides ou leurs mélanges sont de bons isolants électriques et sont faciles à mettre en oeuvre. Ils sont utilisés pour faire des boîtiers et des connecteurs électriques et aussi des revêtements de câbles.

Les qualités ignifuges d'une composition sont classiquement mesurées par le test de l'Indice Limite d'Oxygène ou LOI pour « Limiting Oxygen Index ». La mesure de l'indice limite d'oxygène permet de déterminer la concentration en oxygène minimale dans un mélange oxygène / azote qui permet d'entretenir la combustion d'un plastique en position vertical, avec un allumage en haut de l'échantillon. L'inflammabilité des matériaux est ainsi quantitativement caractérisée.

Pour un résultat au test LOI inférieur à 10%, la composition brûle très facilement. Pour des résultats au test LOI compris entre 21% et 30%, la composition brûle mais s'éteint d'elle-même après un laps de temps plus ou moins long. Dans le domaine de la câblerie, pour la couche ignifuge (un câble étant généralement formé d'une pluralité de couches parallèles), le résultat au test LOI ne doit pas être inférieur à 35%, ce qui correspond à une extinction spontanée ou immédiate de la combustion de la composition.

Il existe différents additifs pour rendre une matière plastique ininflammable, certains à base de produits halogénés, d'autres sans halogène.

L'utilisation de dérivés halogénés présente le grand inconvénient de conduire, lors de la combustion, à des gaz toxiques et corrosifs. Ainsi, comme cela est le cas dans le cadre de la présente invention, les fabricants et transformateurs se sont alors dirigés vers la mise au point de compositions contenant des oxydes, hydroxydes ou sels minéraux de métaux tels que les hydroxydes d'aluminium et de magnésium. L'ajout de ces matériaux confèrent des propriétés ignifuges mais dégradent les propriétés mécaniques de la composition thermoplastique les incluant.

Outre la résistance au feu, pré-requis pour ces compositions ignifuges en câblerie, ces compositions doivent présenter des qualités mécaniques optimums.

Or, une fois résolu les objectifs liés à l'absence de combustion (ou la très faible combustion) des compositions thermoplastiques formant tout ou partie d'un tuyau, câble ou analogue, ces derniers doivent présenter des propriétés mécaniques et thermomécaniques (propriétés mécaniques au cours d'un échauffement thermique conséquent).

Les charges ignifugeantes étant présentes dans des quantités importantes, afin de satisfaire aux propriétés ignifugeantes du tuyau, câble ou analogue, il est nécessaire que la matrice (incluant les charges) confère à la composition le maximum de souplesse ; étant entendu que les charges ignifugeantes tendent à rigidifier ladite composition.

De façon classique, pour conférer de la souplesse à une composition thermoplastique, on y ajoute des polyoléfines telles que des copolymères EVA (éthylène-acétate de vinyle) à très haute teneur en acétate de vinyle ou bien un polyéthylène à très basse densité.

Hélas, l'incorporation de ce type de polyoléfines a pour conséquence d'abaisser le point de fusion de la composition thermoplastique et donc de dégrader très significativement les propriétés thermomécaniques.

Ainsi, à partir d'une composition thermoplastique incluant un taux très élevé de charges, ayant pour conséquence une rigidification importante, la recherche de souplesse pour cette composition se fait nécessairement au détriment des propriétés thermomécaniques.

Il n'existe pas sur le marché, à l'heure actuelle, de compositions thermoplastiques présentant des caractéristiques de hautes performances pour l'ensemble de ces propriétés combinées (souplesse, propriétés thermomécaniques et ignifuges).

### Etat de l'art

On connaît à l'heure actuelle une composition de polymère ignifuge comprenant un copolymère de l'ethylène comprenant des groupes polaires choisis dans le groupe constitué par les acides acryliques, les acides méthacryliques, les acrylates, les méthacrylates, les acétates et les acétates de vinyle; un copolymère de l'ethylène préparé avec un catalyseur à site unique ayant une masse volumique comprise entre 0,860 et 0,910 grams par centimètre cube (g/cm³); une charge minérale exempte d'halogène comprenant une huntite et/ou une hydromagnésite et un homopolymère ou copolymère de l'ethylène modifie par l'anhydride maléique.

On connaît également une composition ignifuge pour câble, sans halogène, préparés a partir d'une composition comprenant de 3 a 10 % en poids d'un polyéthylène a basse température de fusion et présentant des greffons d'anhydride maléique (taux de greffage moyen à élevé) utilisant une résine à base de VLDPE ayant une densité comprise entre 0,86 et 0,91 g/cm3, de 15% à 25% en poids d'au moins un EEA (Ethylène-Éthyle-Acrylate) ou EVA, de 5% à 20% en poids d'un polymère α-oléfine et de 40% à 65% en poids d'un agent inorganique retardateur de flamme. Cette composition correspond sensiblement à la composition « DM2 » testée ci-après par la titulaire.

On connaît en outre une composition ignifuge, à forte charge minérale, comportant un inter-polymère multiblocs oléfinique et d'un agent compatibilisant a base d'un monomère polaire.

On connaît également une composition ignifuge (contenant des charges ignifugeantes) contenant quatre éléments, à savoir un copolymère EVA (éthylène-acétate de vinyle), un polyéthylène à très basse densité, un autre polyéthylène à très basse densité greffé anhydride maléique et un polyéthylène à basse densité linéaire. Cette composition correspond sensiblement à la composition notée « DM1 » dans les tests présentés ci-après.

Enfin, on connaît le document FR 2985731 qui divulgue une composition thermoplastique ignifugée (exemple 9 dudit document) comportant :
- 63% en poids de trihydrate d'aluminium,
- 22,75% en poids d'EVA,
- 9% en poids de LLDPE non fonctionnalisé,
- 5% en poids d'un LLDPE, greffé par des greffons d'anhydride maléique, et
- 0,25% en poids d'un antioxydant.

Une telle composition est beaucoup trop dure (cf. exemple DM12 ci-après) et si l'on vient à remplacer le LLDPE non fonctionnalisé par un VLDPE, à l'encontre de enseignements de l'homme du métier relativement aux qualités thermomécaniques de la composition, une telle composition reste toujours trop dur (cf. exemple DM8 avec un Shore D à 43).

On connaît également des compositions divulguées dans les documents FR 2870542, EP 0953599 et EP 1092751.

Toutes ces compositions ignifuges peuvent donner satisfaction dans certaines applications mais soit elles ne satisfont pas l'ensemble des caractéristiques de hautes performances pour l'ensemble de ces propriétés combinées (souplesse, propriétés thermomécaniques et ignifuges) soit elles sont trop couteuse (coût des composants, coût du processus de préparation/fabrication).

### Brève description de l'invention

Après expérimentations, la demanderesse a découvert, de façon surprenante, qu'une composition ignifugée sans halogène associant, dans des proportions et avec des propriétés particulières, un copolymère éthylène-acétate de vinyle, polyéthylène à très basse densité (VLDPE) non fonctionnalisé et un polyéthylène à basse densité linéaire greffé anhydride maléique, permet de conférer à la composition ignifuge, la souplesse requise tout en conservant ou maintenant des propriétés thermomécanique optimales.

La présente invention entend ainsi remédier à la baisse catastrophique des propriétés thermomécaniques des compositions ignifuges de l'art antérieur lorsqu'on augmente la souplesse desdites compositions, en proposant une composition thermoplastique répondant deux exigences essentielles des tuyaux, câbles ou analogues, à savoir la souplesse et la tenue thermomécanique.

Plus précisément, la composition recherchée dans le cadre de la présent invention doit présenter une souplesse équivalente aux compositions utilisées à l'heure actuelle sur le marché, ce niveau de souplesse étant acceptée et satisfaisants pour tous les acteurs du domaine technique des tuyaux, câbles ou analogues.

Les propriétés thermomécaniques sont mesurées ici par le biais du test, bien connu de l'homme du métier, dénommé « Hot Pressure Test » tandis que la souplesse est mesurée par le test dénommé « Shore D », également bien connu de l'homme du métier.

Un autre test relatif aux propriétés mécaniques de la composition a été réalisé afin de vérifier ces dernières à température ambiante : il s'agit d'un test de traction classique selon la norme ISO R527 : 93-1BA.

La présente invention concerne ainsi une composition thermoplastique ignifugée sans halogène caractérisée en ce qu'elle consiste en :
- 50 % à 75 % en poids de charges ignifugeantes,
- 0,1 % à 45 % en poids d'un copolymère d'éthylène et d'un monomère éthylénique portant une fonction polaire,
- 10 % à 25 % en poids d'un polyéthylène à très basse densité (VLDPE) non fonctionnalisé,
- optionnellement, jusqu'à 10% d'additifs,
- et 0,1 % à 10 % en poids d'un polyéthylène à basse densité linéaire (LLDPE),
caractérisée en ce que la densité du polyéthylène à très basse densité (VLDPE) est comprise entre 0,85 et 0,91, en ce que la densité du polyéthylène à basse densité linéaire est supérieure à 0,91 et en ce que le polyéthylène à basse densité linéaire (LLDPE) est greffé par des greffons d'anhydride maléique présents sur la chaine principale.

Par rapport à la solution actuelle disponible sur le marché, la composition thermoplastique selon l'invention permet de n'utiliser que trois composants thermoplastiques au lieu de quatre. Outre le gain de coût lié à ces nécessaires diverses sources d'approvisionnement, le procédé de fabrication de la composition ignifuge est avantageusement simplifié.

D'autres caractéristiques avantageuses de l'invention sont précisées dans la suite :
- avantageusement, le susdit polyéthylène à basse densité linéaire (LLDPE) est compris entre 2,5 % et 7% en poids de la composition, de préférence entre 3,5 % et 5 % ;
- avantageusement, le susdit polyéthylène à très basse densité (VLDPE) représente au plus 20 % en poids de la composition. ;
- de préférence, le monomère éthylénique portant une fonction polaire comprend de 3 à 20 atomes de carbone, préférentiellement de 4 à 8 atomes ;
- de préférence, le monomère éthylénique portant une fonction polaire est choisi parmi les esters vinyliques d'acide carboxylique saturé, les acides carboxyliques insaturés ou les esters (méth)acryliques d'acide carboxylique insaturé ;
- avantageusement, l'agent ignifugeant est une charge minérale, en particulier le trihydroxyde d'aluminium et/ou le dihydroxyde de magnésium ;
- les additifs sont choisis parmi les antioxydants, les anti U.V., les agents antistatiques, les charges minérales, les pigments de coloration, les zéolithes et/ou les agents « anti gouttes » (produits à base de silicone (PDMS) ou des produits fluorés comme le PTFE) ;
- selon une variante préférée de l'invention, les susdites charges ignifugeantes représentent plus de 60 % en poids de la composition.

La présente invention concerne plus particulièrement un câble ou tuyau présentant au moins deux couches dont au moins une couche est formée par la susdite composition thermoplastique tel qu'énoncée ci-dessus.

### Description détaillée de l'invention

La présente invention concerne une composition ignifuge dans laquelle on trouve, outre des additifs fonctionnels éventuellement présents, trois composants thermoplastiques spécifiques dont l'association permet de résoudre les problèmes des compositions ignifuges de l'art antérieur, en particulier dans leurs applications à des câbles, tubes, tuyaux ou analogues.

Bien entendu, la composition ignifuge thermoplastique selon l'invention pourra éventuellement comprendre un ou plusieurs autres composants, notamment de type thermoplastique, mais les problèmes techniques définis précédemment sont résolus avec les seuls trois composants spécifiques de sorte que dans un mode de réalisation avantageux, la composition selon l'invention ne comprendra que ces trois composants thermoplastiques, à l'exclusion de tous autres composants thermoplastiques.

Ces trois composants thermoplastiques sont :
- un copolymère d'éthylène et d'un monomère éthylénique portant une fonction polaire,
- un polyéthylène non fonctionnalisé à très basse densité comprise entre 0,85 et 0,91,
- un polyéthylène à basse densité linéaire, dont la densité est supérieure à 0,91, greffé par des greffons d'anhydride maléique.

S'agissant du polyéthylène (non fonctionnalisé) à très basse densité et du polyéthylène à basse densité linéaire fonctionnalisé par greffage d'anhydride maléique, on entend par polyéthylène des homo- ou copolymères. A titre de comonomères, on peut citer les alpha-oléfines, avantageusement celles ayant de 3 à 30 atomes de carbone. Des exemples d'alpha oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.

Le polyéthylène peut être d'origine métallocène. On désigne par polyéthylène métallocène les polymères obtenus par copolymérisation d'éthylène et d'alpha oléfine telle que par exemple propylène, 1-butène, 1-héxène ou 1-octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme co-catalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi etre utilisés. Ces polyéthylènes métallocènes peuvent aussi etre caractérisés par leur rapport Mw / Mn < 3 et de préférence < 2 dans lequel Mw et Mn désignent respectivement la masse molaire moyenne en poids et la masse molaire moyenne en nombre. On désigne aussi par polyéthylène métallocène ceux ayant un MFR (« Melt Flow Ratio » ou rapport d'indice de fluidité) inférieur à 6,53 et un rapport Mw / Mn supérieur à MFR moins 4,63. MFR désigne le rapport du MFI 10 (MFI sous une charge de 10 kg) au MFI2 (MFI sous une charge de 2,16 kg). D'autres polyéthylènes métallocènes sont définis par un MFR égal ou supérieur à 6,13 et un rapport Mw / Mn inférieur ou égal à M FR moins 4,63.

Avantageusement la densité du polyéthylène à très basse densité est comprise entre 0,850 et 0,910.

Avantageusement la densité du polyéthylène à basse densité linéaire fonctionnalisé par greffage d'anhydride maléique est supérieure à 0,91.

Le greffage de l'anhydride maléique sur le polyéthylène à basse densité linéaire est une opération connue en soi par l'homme du métier. Le taux de greffage de l'anhydride maléique, c'est-à-dire le nombre d'unités de monomère d'anhydride maléique dans le polymère greffé, est variable suivant le polyéthylène considéré et peut varier de 0,1% à 4% en poids, préférentiellement de 0,4% à 2% en poids du polymère greffé.

S'agissant du copolymère d'éthylène et d'un monomère éthylénique portant une fonction polaire, on entend par monomère éthylénique, un monomère comprenant une insaturation susceptible de réagir avec l'éthylène dans un procédé par voie radicalaire. Par fonction polaire, on entend une fonction présentant un moment dipolaire, tel que les fonctions amine, alcool, uréthane, acide ou ester. Préférentiellement, la fonction polaire est une fonction acide ou une fonction ester.

Le monomère éthylénique portant une fonction polaire comprend préférentiellement de 3 à 20 atomes de carbone, préférentiellement de 4 à 8 atomes de carbone.

A titre d'exemple de copolymère, on peut citer les copolymères d'éthylène et d'un ester vinylique d'acide carboxylique, les copolymères d'éthylène et d'un acide carboxylique insaturé ou encore les copolymères d'éthylène et d'un acrylate et ou d'un méthacrylates d'alkyle, regroupés dans la présente demande sous le terme (méth)acrylate d'alkyle. Avantageusement, le monomère éthylénique peut être choisi parmi l'acétate de vinyle et les (méth)acrylates de méthyle, d'éthyle ou de butyle.

La quantité massique en monomère éthylénique par rapport à la masse totale du copolymère peut être comprise dans la gamme allant de 1 à 70%, avantageusement de 10 à 60% et préférentiellement de 20 à 45%.

Selon l'invention, les quantités des différents monomères présents dans le copolymère peuvent être mesurées par spectroscopie infrarouge en utilisant la norme ISO8985 (1998). La température de ramollissement du copolymère peut être mesurée par la Norme ASTM E 28-99(2004).

On peut utiliser les procédés dits de polymérisation radicalaire fonctionnant habituellement à des pressions entre 200 et 2 500 bars. Ces procédés sont mis en oeuvre industriellement en utilisant deux types principaux de réacteurs : un réacteur de type autoclave ou un réacteur de type tubulaire. Ces procédés de polymérisation connus de l'homme du métier et on peut utiliser par exemple les procédés décrits dans les documents FR2498609, FR2569411 et FR2569412. L'homme du métier sait dans quelles proportions utiliser chacun des monomères pour obtenir le copolymère, d'éthylène et d'un monomère éthylénique portant une fonction polaire, utilisé dans l'invention.

Ces copolymères sont commercialisés par la demanderesse sous les marques EVATANE® et LOTRYL®.

S'agissant de l'agent ignifugeant, dans le cadre des exemples choisis pour illustrer l'invention, c'est-à-dire la réalisation des tests des compositions selon l'invention au regard de celles selon l'art antérieur, il a été choisi deux retardateurs de flamme (ignifugeant) inorganiques classiquement utilisés, à savoir le trihydroxyde d'aluminium (ATH) et, éventuellement en remplacement ou en complément, le dihydroxyde de magnésium (MDH).

Les ignifugeants inorganiques sont ainsi préférés dans la composition selon l'invention.

Néanmoins, on pourra également considérer que l'agent ignifugeant répond à la définition des composés susceptibles de former au moment de la combustion des acides tels que H₃PO₄ (acide orthophosphorique), (HPO₃)ₙ (acide métaphosphorique) et H₄P₂O₇ (acide pyrophosphorique). A titre d'illustration de tels agents, on peut citer les phosphates, les phosphinates, les pyrophosphates et les polyphosphates d'ammonium, les phosphates de mélamine, le phosphite de mélamine, le phosphite et le diphosphite de pipérazine, le phosphate de guanazole, le pyrophosphate de mélamine et le pyrophosphate de pipérazine.

On peut utiliser également les polyphosphates d'ammonium, qui sont des polymères en chaîne simple de formule générale (NH₄)ₙ₊₂ PₙO₃ₙ₊₁, dans laquelle n représente un nombre entier supérieur ou égal à 2. Le polyphosphate d'ammonium peut être encapsulé dans une résine à base de mélamine. On ne sortirait pas du cadre de l'invention en utilisant un mélange des agents ignifugeants précités. L'agent ignifugeant peut être fonctionnalisé, par exemple il peut porter des fonctions silanes.

L'ignifugeant de la composition selon l'invention pourra également consister en un retardateur de flamme contenant de l'azote. Il sera alors choisi parmi la mélanine pure, des dérivés de mélamine comme des sels d'acides organiques ou inorganiques tels que l'acide borique, l'acide cyanurique, l'acide phosphorique ou l'acide pyro- / polyphosphorique, les homologues de la mélamine comme le melam ou le melem.

L'ignifugeant de la composition pourra consister en des composés contenant du bore (borates, mélanges d'acides boriques et de borax, borate de zinc...), le trioxyde d'antimoine, des composés de zinc (sulfures de zinc, hydroxystannate de zinc...), des mélanges intumescents (par exemple mélange de polyphosphates d'ammonium, pentaérythritol, dérivés de la mélanine), du graphite expansible ou des nanocomposites (par exemple argile de silicates d'aluminium comme la montmorillonite).

On notera enfin que la composition selon l'invention comprend éventuellement du phosphore rouge, classiquement utilisé en mélange dans les polyoléfines.

Ainsi, l'ignifugeant de la composition selon l'invention est l'un des produits susvisés ou une combinaison de ces produits.

### Préparation de la composition :

Les compositions selon l'invention peuvent être préparées selon un procédé en une étape au cours de laquelle on mélange les ingrédients pour donner une composition homogène et réaliser les éventuelles réactions chimiques entre composants. Ces compositions peuvent être préparées en mélangeant les différents constituants par les moyens classiques de mise en oeuvre des thermoplastiques fortement chargés comme par exemple l'extrusion ou le malaxage. On peut utiliser un mélangeur interne, un co-malaxeur ou une extrudeuse bi-vis co-rotative. Préférentiellement, les compositions sont réalisées à une température supérieure ou égale à la température de fusion des constituants et inférieure à la température de début de décomposition de l'agent ignifugeant.

Des charges, en particulier minérales, peuvent être ajoutées pour améliorer la tenue thermomécanique de la composition. De façon non limitative, on donnera comme exemples la silice, l'alumine, le talc ou les carbonates de calcium ou les nanotubes de carbone. Avantageusement, on utilise des argiles modifiées ou non modifiées qui sont mélangées à l'ordre nanométrique ; ceci afin de satisfaire les exigences de certaines normes d'inflammabilité des matières plastiques, telle que l'UL94-V0 (auto-extinguible en 10 secondes maximum, sans goutte enflammée).

Des plastifiants peuvent être ajoutés afin de faciliter la mise en oeuvre et améliorer la productivité du procédé de fabrication de la composition et des structures. On peut citer comme exemples les huiles minérales paraffiniques aromatiques ou naphtaléniques. On peut également citer comme plastifiant les phtalates, azelates, adipates, le phosphate de ticrésyle.

On ne sortirait pas non plus du cadre de l'invention si on ajoutait aux compositions des agents « anti gouttes » comme des produits à base de silicone (PDMS) ou des produits fluorés comme le PTFE.

### Obtention des formulations testées :

Les formulations décrites ci-dessous sont préparées par extrusion grâce à un co-malaxeur de marque BÜSS PR46 de diamètre 46 millimètres, de longueur 15 fois son diamètre et équipé d'une mono-vis de reprise de diamètre 70 millimètres. La vis et les fourreaux du co-malaxeur sont chauffés respectivement à 100°C et 110°C alors que la mono-vis de reprise est chauffée à 150°C. Le débit d'extrusion est de 15kg/h (kilogrammes par heure) pour une vitesse de rotation du co-malaxeur de 285 trs/min (tours par minute). Les différents constituants (à l'exception de la charge ignifugeante) sont introduits dans la première trémie (trémie 1), la charge ignifugeante est introduite à parts égales dans les trémies 1 et 2.

Outre cette application en câblerie, la composition thermoplastique ignifuge selon l'invention trouve d'autres applications où son caractère de résistances au feu et ses bonnes propriétés mécanique, thermomécanique et de souplesse, sont requis. Ces compositions ont l'avantage d'être transformables en articles industriels (feuilles, plaques, profilés, corps creux, tuyaux), présentant une résistance au feu améliorée, par les techniques classiques de transformation des polyoléfines (extrusion, injection, roto-moulage).

### Matériaux employés pour former les formulations testées :

**ATH :** Trihydroxyde d'aluminium possédant une surface spécifique de 4m2/g.
**Orevac® 18340** : Polyéthylène à basse densité linéaire greffé anhydride maléique, noté LLDPE-g-AM, produit par ARKEMA possédant un MFI (190°C, 2.16kg mesuré selon ISO 1133) de 3 g/10mn et une densité de 0,918.
**Evatane® 28-03** : Copolymère d'éthylène et d'acétate de vinyle (28% en poids), noté EVA, produit par ARKEMA possédant un MFI (190°C, 2,16kg mesuré selon ISO 1133) de 3 g/10mn.
**LLDPE** : Polyéthylène à basse densité linéaire possédant un MFI (190°C, 2,16kg mesuré selon ISO 1133) de 1 g/10mn et une densité de 0,921.
**VLDPE** : Polyéthylène à très basse densité possédant un MFI (190°C, 2,16kg mesuré selon ISO 1133) de 1 g/10mn et une densité de 0,870.
**Fusabond® N525** : Polyéthylène à très basse densité greffé anhydride maléique, noté VLDPE-g-AM, produit par DUPONT possédant une densité de 0,88.
**Antioxydant** : Antioxydant par exemple de type phénolique.

La présente invention est illustrée plus en détail par les exemples non limitatifs suivants. Les compositions ci-dessous, qu'elles soient propres à l'invention ou selon l'art antérieur, comportent exactement le même taux ou pourcentage massique de charges ignifugeantes dans la composition afin de ne pas fausser les résultats des tests. On choisi un pourcentage massique de 63 % de charges ignifugeantes (par rapport à la masse totale de la composition considérée) dans toutes les compositions testées ci-dessous, cette valeur correspondant sensiblement à la valeur habituelle pour les charges ignifugeantes.

Par ailleurs, pour comparer les exemples de l'invention vis-à-vis d'autres compositions thermoplastiques ignifuges (exemples 1 à 4), les exemples suivants de composition ont été proposés pour les tests ; étant entendu que les résultats reportés ci-dessous ne sont pas exhaustifs et que les études en laboratoire et pré-industriellement ont permis de déterminé plus précisément la composition thermoplastique ignifuge selon l'invention, ainsi que ses variantes préférées.
Exemple 1 : la composition intitulée « DM1 » est une formulation selon l'art antérieur. Elle comprend, en pourcentage massique 19% d'EVA, 10% de VLDPE, 4% de LLDPE et 4% de VLDPE-greffé AM.
Exemple 2 : la composition intitulée « DM2 » est une formulation selon l'art antérieur. Elle comprend, en pourcentage massique 23% d'EVA, 10% de VLDPE et 4% de VLDPE-greffé AM.
Exemple 3 : la composition intitulée « DM3 » est une formulation n'entrant pas dans le cadre de la présente invention, cette composition ne comprenant pas de LLDPE-g-AM. Elle comprend, en pourcentage massique 23 % d'EVA et 14 % de VLDPE.
Exemple 4 : la composition intitulée « DM4 » est une formulation n'entrant pas dans le cadre de la présente invention, cette composition comprenant un LLDPE non fonctionnalisé par greffage d'anhydride maléique. Elle comprend, en pourcentage massique 19 % d'EVA, 14 % de VLDPE et 4 % de LLDPE.
Exemple 5 : la composition intitulée « DM5 » est une formulation entrant dans le cadre de la présente invention. Elle comprend, en pourcentage massique 19 % d'EVA, 14 % de VLDPE et 4 % de LLDPE-g-AM.
Exemple 6 : la composition intitulée « DM6 » est une formulation entrant dans le cadre de la présente invention. Elle comprend, en pourcentage massique 15 % d'EVA, 18 % de VLDPE et 4 % de LLDPE-g-AM.
Exemple 7 : la composition intitulée « DM7 » est une formulation entrant dans le cadre de la présente invention. Elle comprend, en pourcentage massique 12 % d'EVA, 22 % de VLDPE et 3 % de LLDPE-g-AM.
Exemple 8 : la composition intitulée « DM8 » est une formulation n'entrant pas dans le cadre de la présente invention. Elle comprend, en pourcentage massique 22 % d'EVA, 9 % de VLDPE et 6 % de LLDPE-g-AM.
Exemple 9 : la composition intitulée « DM9 » est une formulation n'entrant pas dans le cadre de la présente invention. Elle comprend, en pourcentage massique 27 % d'EVA, 4 % de VLDPE et 2 % de LLDPE-g-AM.
Exemple 10 : la composition intitulée « DM10 » est une formulation entrant dans le cadre de la présente invention. Elle comprend, en pourcentage massique 2 % d'EVA, 27 % de VLDPE et 8 % de LLDPE-g-AM.
Exemple 11 : la composition intitulée « DM11 » est une formulation n'entrant pas dans le cadre de la présente invention, cette composition comprenant un pourcentage massique trop important LLDPE. Elle comprend, en pourcentage massique 11 % d'EVA, 14 % de VLDPE et 12 % de LLDPE.
Exemple 12 : la composition intitulée « DM12 » est une formulation n'entrant pas dans le cadre de la présente invention. Elle comprend, en pourcentage massique 22,75% d'EVA, 9% de LLDPE et 5% de VLDPE-greffé AM.

### Tests effectués sur les matériaux :

Les granulés ou composants sont mis en forme grâce à une extrudeuse double vis contrarotative de laboratoire de type ThermoHaake Rheocord® System 40 équipée d'une filière plate ; l'extrudeuse étant chauffée à 150°C pour obtenir des bandes à partir desquelles seront découpées les éprouvettes nécessaires afin de caractériser ou tester les matériaux.

Les premiers tests présentent les propriétés mécaniques des différents matériaux testés, en termes d'allongement et de contrainte à la rupture, mesurées selon la norme ISO R527 : 93-1BA, après conditionnement de ces matériaux pendant 48H dans un milieu présentant 50% d'humidité relative (HR = 50).

Le second test consiste en un test « Shore D » selon la norme ISO 868, 15 secondes.

Le troisième test consiste en un test de « Hot Pressure Test » à 80, 90 et 100°C selon la norme NF EN 60811-3-1, 8.2 adapté à des échantillons de 20 mm x 20 mm x 2 mm avec un poids de 136g (lame comprise), le tout placé deux heures dans une étuve.

Le dernier test considère l'indice limite d'oxygène (LOI), mesuré selon la norme ISO 4589-2.

Tous ces tests sont réalisés de façon classique en prenant des éprouvettes standards de forme identique pour chaque composition testée et en leur faisant subir chaque test sur banc d'essai, selon les définitions (forme, dimensions, vitesses d'essai, étalonnage de la machine, exactitude des appareils etc.) données par les normes internationales et bien connues de l'homme du métier.

### Résultats des tests réalisés sur les éprouvettes des différentes formulations :

Sur les résultats montrés dans le tableau ci-dessous, les éprouvettes DM2 à DM4 et DM11 ne donnent pas satisfaction car leurs résultats sur l'ensemble des tests pratiqués se révèlent peu performants, voire inadéquates pour l'utilisation envisagée.

Concernant l'éprouvette DM1, certes les résultats sur l'ensemble des tests ne sont pas trop mauvais mais cette composition comprend quatre composants (outre d'éventuels additifs), ce qui la rend couteuse et son procédé de fabrication est plus complexe et plus long.

Seules les éprouvettes DM5 à DM10 sont conforme à une composition selon l'invention. Elles présentent des propriétés satisfaisantes, avec des différences permettant d'illustrer les proportions préférées respectives des différents composants thermoplastiques.

En effet, on notera que ces tests permettent d'identifier des domaines privilégiés pour les résultats, à savoir que les résultats de DM5 et DM6 sont supérieurs à ceux de DM7 ou DM8, ces derniers étant meilleurs que les résultats des éprouvettes DM9 et DM10.

De manière générale, les résultats suivants pour les différents tests doivent être obtenus pour qu'une composition soit satisfaisante dans l'application envisagée :
L'allongement à la rupture doit être ≥ 150 %, préférentiellement ≥ 200 % et plus préférentiellement ≥ 250 %.

La contrainte à la rupture doit être ≥ 10 Mpa (Méga Pascal), préférentiellement ≥ 1 MPa et plus préférentiellement ≥ 12 MPa.

La mesure de Shore D (sans unité), bien connu de l'homme du métier, doit être ≤ 41.

Le résultat du « Hot Pressure Test », également bien connu par l'homme du métier, doit être ≤ 50 % à 80°C, préférentiellement ≤ 50 % à 90°C et plus préférentiellement ≤ 50 % à 100°C.

| | | **DM1** | **DM2** | **DM3** | **DM4** | **DM5** | **DM6** | **DM7** | **DM8** | **DM9** | **DM10** | **DM11** | **DM12** |
|---|---|---|---|---|---|---|---|---|---|---|---|---|---|
| **taux EVA (%)** | | **19** | **23** | **23** | **19** | **19** | **15** | **12** | **22** | **27** | **2** | **11** | **22,75** |
| **taux VLDPE (%)** | | **10** | **10** | **14** | **14** | **14** | **18** | **22** | **9** | **4** | **27** | **14** | **-** |
| **taux VLDPE-g-AM (%)** | | **4** | **4** | **-** | **-** | **-** | **-** | **-** | **-** | **-** | **-** | **-** | **-** |
| **taux LLDPE (%)** | | **4** | **-** | **-** | **4** | **-** | **-** | **-** | **-** | **-** | **-** | **-** | **9** |
| **taux LLDPE-g-AM (%)** | | **-** | **-** | **-** | **-** | **4** | **4** | **3** | **6** | **2** | **8** | **12** | **5** |
| **allongement rupture (%)** | | **251** | **276** | **138** | **145** | **270** | **292** | **285** | **214** | **165** | **312** | **245** | **201** |
| **contrainte rupture (MPa)** | | **10,3** | **11,4** | **8,2** | **9,3** | **12,8** | **12,1** | **11,5** | **13,3** | **11,5** | **10,5** | **13,5** | **13,8** |
| **Shore D** | | **41** | **40** | **40** | **41** | **41** | **40** | **39** | **43** | **45** | **44** | **48** | **51** |
| **Hot Pressure Test (%)** | **80°C** | **8** | **100** | **100** | **5** | **3** | **8** | **15** | **0** | **36** | **0** | **0** | **0** |
| | **90°C** | **25** | **100** | **100** | **21** | **18** | **26** | **43** | **9** | **67** | **2** | **1** | **0** |
| | **100°C** | **49** | **100** | **100** | **35** | **26** | **45** | **68** | **17** | **100** | **17** | **7** | **3** |
| **LOI (%)** | | **35,1** | **35,6** | **35,3** | **35,4** | **35.8** | **35,2** | **35,6** | **35,1** | **35,3** | **35,8** | **35,9** | **36,9** |

## Revendications

1. Composition thermoplastique ignifugée sans halogène **caractérisée en ce qu'**elle consiste en :
- 50 % à 75 % en poids de charges ignifugeantes,
- 0,1 % à 45 % en poids d'un copolymère d'éthylène et d'un monomère éthylénique portant une fonction polaire,
- 10 % à 25 % en poids d'un polyéthylène à très basse densité (VLDPE) non fonctionnalisé,
- optionnellement, jusqu'à 10% d'additifs,
- et 0,1 % à 10 % en poids d'un polyéthylène à basse densité linéaire (LLDPE),
**caractérisée en ce que** la densité du polyéthylène à très basse densité (VLDPE) est comprise entre 0,85 et 0,91, **en ce que** la densité du polyéthylène à basse densité linéaire est supérieure à 0,91 et **en ce que** le polyéthylène à basse densité linéaire (LLDPE) est greffé par des greffons d'anhydride maléique présents sur la chaine principale.

2. Composition selon la revendication 1, **caractérisée en ce que** le susdit polyéthylène à basse densité linéaire (LLDPE) est compris entre 2,5 % et 7% en poids de la composition, de préférence entre 3,5 % et 5 %.

3. Composition selon la revendication 1 ou 2, **caractérisée en ce que** le susdit polyéthylène à très basse densité (VLDPE) représente au plus 20 % en poids de la composition.

4. Composition selon l'une quelconque des revendications précédentes, **caractérisée en ce que** le monomère éthylénique portant une fonction polaire comprend de 3 à 20 atomes de carbone, préférentiellement de 4 à 8 atomes.

5. Composition selon l'une quelconque des revendications précédentes, **caractérisée en ce que** le monomère éthylénique portant une fonction polaire est choisi parmi les esters vinyliques d'acide carboxylique saturé, les acides carboxyliques insaturés ou les esters (méth)acryliques d'acide carboxylique insaturé.

6. Composition selon l'une quelconque des revendications précédentes, **caractérisée en ce que** l'agent ignifugeant est une charge minérale, en particulier le trihydroxyde d'aluminium et/ou le dihydroxyde de magnésium.

7. Composition selon l'une quelconque des revendications précédentes, **caractérisée en ce que** les additifs sont choisis parmi les antioxydants, les anti U.V., les agents antistatiques, les charges minérales, les pigments de coloration, les zéolithes et/ou les agents « anti gouttes » (produits à base de silicone (PDMS) ou des produits fluorés comme le PTFE).

8. Composition selon l'une quelconque des revendications précédentes, **caractérisée en ce que** les susdites charges ignifugeantes représentent plus de 60 % en poids de la composition.

9. Câble ou tuyau présentant au moins deux couches dont au moins une couche est formée par la susdite composition thermoplastique selon l'une quelconque des revendications 1 à 8.

## Patentansprüche

1. Halogenfreie, feuerfeste thermoplastische Zusammensetzung, **dadurch gekennzeichnet, dass** sie besteht aus:
- 50 bis 75 Gew.-% flammhemmende Füllstoffe,
- 0,1 bis 45 Gew.-% eines Copolymers aus Ethylen und einem ethylenischen Monomer mit einer polaren Funktion,
- 10 bis 25 Gew.-% nicht funktionalisiertes Polyethylen sehr niedriger Dichte (VLDPE),
- optional bis zu 10 % Zusatzstoffe,
- und 0,1 bis 10 Gew.-% eines linearen Polyethylens niedriger Dichte (LLDPE),
**dadurch gekennzeichnet, dass** die Dichte des Polyethylens sehr niedriger Dichte (VLDPE) zwischen 0,85 und 0,91 liegt, dass die Dichte des linearen Polyethylens niedriger Dichte größer als 0,91 ist und dass das lineare Polyethylen niedriger Dichte (LLDPE) durch an der Hauptkette vorhandene Maleinsäureanhydridtransplantate gepfropft wird.

2. Zusammensetzung gemäß Anspruch 1, **dadurch gekennzeichnet, dass** das lineare Polyethylen niedriger Dichte (LLDPE) zwischen 2,5 und 7 Gew.-% der Zusammensetzung, vorzugsweise zwischen 3,5 und 5 %, beträgt.

3. Zusammensetzung gemäß Anspruch 1 oder 2, **dadurch gekennzeichnet, dass** das Polyethylen sehr niedriger Dichte (VLDPE) höchstens 20 Gew.-% der Zusammensetzung ausmacht.

4. Zusammensetzung gemäß einem der vorangehenden Ansprüche, **dadurch gekennzeichnet, dass** das ethylenische Monomer mit einer polaren Funktion 3 bis 20 Kohlenstoffatome, vorzugsweise 4 bis 8 Atome, umfasst.

5. Zusammensetzung gemäß einem der vorangehenden Ansprüche, **dadurch gekennzeichnet, dass** das ethylenische Monomer mit einer polaren Funktion ausgewählt ist aus gesättigten Carbonsäurevinylestern, ungesättigten Carbonsäuren oder ungesättigten Carbonsäure(meth)acrylsäureestern.

6. Zusammensetzung gemäß einem der vorangehenden Ansprüche, **dadurch gekennzeichnet, dass** es sich bei dem Flammschutzmittel um einen mineralischen Füllstoff handelt, insbesondere Aluminiumtrihydroxid und/oder Magnesiumdihydroxid.

7. Zusammensetzung gemäß einem der vorangehenden Ansprüche, **dadurch gekennzeichnet, dass** die Zusatzstoffe ausgewählt sind aus Antioxidantien, UV-Inhibitoren, Antistatikmitteln, mineralischen Füllstoffen, Farbpigmenten, Zeolithen und/oder "Anti-Tropf"-Mitteln (Silikonprodukten (PDMS) oder fluorierten Produkten wie PTFE).

8. Zusammensetzung gemäß einem der vorangehenden Ansprüche, **dadurch gekennzeichnet, dass** die oben genannten flammhemmenden Füllstoffe mehr als 60 Gew.-% der Zusammensetzung ausmachen.

9. Kabel oder Rohr mit mindestens zwei Schichten, von denen mindestens eine Schicht durch die oben genannte thermoplastische Zusammensetzung gemäß einem der Ansprüche 1 bis 8 gebildet ist.

## Claims

1. A halogen-free fire-retardant thermoplastic composition, **characterized in that** it consists of:
- 50% to 75% by weight of fire-retardant fillers,
- 0.1% to 45% by weight of a copolymer of ethylene and of an ethylenic monomer carrying a polar functional group,
- 10% to 25% by weight of a non-functionalized very-low-density polyethylene (VLDPE),
- optionally up to 10% of additives,
- and 0.1% to 10% by weight of a linear low-density polyethylene (LLDPE),
**characterized in that** the density of the very-low-density polyethylene (VLDPE) is between 0.85 and 0.91, **in that** the density of the linear low-density polyethylene is greater than 0.91 and **in that** the linear low-density polyethylene (LLDPE) is grafted with maleic anhydride grafts present on the main chain.

2. The composition as claimed in claim 1, **characterized in that** the abovesaid linear low-density polyethylene (LLDPE) is between 2.5% and 7% by weight of the composition, preferably between 3.5% and 5%.

3. The composition as claimed in claim 1 or 2, **characterized in that** the abovesaid very-low-density polyethylene (VLDPE) represents at most 20% by weight of the composition.

4. The composition as claimed in any one of the preceding claims, **characterized in that** the ethylenic monomer carrying a polar functional group comprises from 3 to 20 carbon atoms, preferably from 4 to 8 atoms.

5. The composition as claimed in any one of the preceding claims, **characterized in that** the ethylenic monomer carrying a polar functional group is chosen from saturated carboxylic acid vinyl esters, unsaturated carboxylic acids or unsaturated carboxylic acid (meth)acrylic esters.

6. The composition as claimed in any one of the preceding claims, **characterized in that** the fire-retardant agent is an inorganic filler, in particular aluminum trihydroxide and/or magnesium dihydroxide.

7. The composition as claimed in any one of the preceding claims, **characterized in that** the additives are chosen from antioxidants, UV stabilizers, antistatic agents, inorganic fillers, coloring pigments, zeolites and/or "anti-dripping" agents (products based on silicone (PDMS) or fluorinated products, such as PTFE).

8. The composition as claimed in any one of the preceding claims, **characterized in that** the abovesaid fire-retardant fillers represent more than 60% by weight of the composition.

9. A cable or pipe exhibiting at least two layers, at least one layer of which is formed by the abovesaid thermoplastic composition as claimed in any one of claims 1 to 8.
